# EUROPEAN PATENT SPECIFICATION

(11) **EP 4 296 183 B1**
(45) Date of publication and mention of the grant of the patent: **01.01.2025**
(21) Application number: 23179913.1
(22) Date of filing: 19.06.2023
(51) Int. Cl.: B65D 41/34, B65D 55/16

(54) **CONTAINER CAP ASSEMBLY WITH AN RFID TAG**
BEHÄLTERVERSCHLUSSBAUGRUPPE MIT EINEM RFID-TAG
ENSEMBLE DE BOUCHON DE CONTENEUR AVEC UNE ÉTIQUETTE RFID

(30) Priority: 22.06.2022 CZ 20220280
(43) Date of publication of application: 27.12.2023
(73) Proprietor: Sensoneo j. s. a., 841 06 Bratislava (SK)
(72) Inventor: Basila, Martin, 84106 Bratislava (SK)
(74) Representative: Tomickova, Dana

(56) References cited:
- EP-A2- 1 083 519
- CN-A- 101 767 678
- DE-A1- 102019 007 143

## Description

### Field of the Invention

The invention relates to an RFID tag arrangement in a container cap that solves the issues associated with identifying the integrity of the container and its original cap even after the container has been opened, particularly for returnable containers and containers intended for recycling.

### Background of the Invention

In the current state of the art, there are known solutions for identifying containers or other packaging using a barcode, QR code or RFID tag which is electronically readable and allows displaying information about the packaging or its contents, wherein the use of an RFID tag appears to be the most advantageous in terms of size and function. However, the mere presence of an RFID tag on a container may not provide other necessary information about the condition of the container and its cap, e.g., whether the used container also has its original cap, which is particularly important when collecting returnable bottles for reuse or joint recycling of the bottle and cap.

Known solutions for bottles with an RFID tag, which includes an RFID chip and an antenna connected by a connecting wire, involve one element of the RFID chip-antenna pair being located in the bottle cap and the other element of this pair is located on the bottle neck or on the bottle neck collar. For example, document CN103854049 A describes an RFID tag on a protective foil that covers both the neck and the mouth of the bottle at the same time, wherein the RFID chip is located on the top surface covering the mouth of the bottle and the antenna is located on a side portion of the foil (on the bottle neck). However, when the bottle is first opened, the foil on the bottle neck and the connecting wire are torn and the function of the RFID tag is deactivated.

Document KR20130017736 A describes a solution with an RFID chip located on the bottle cap and an antenna in a collar on the bottle neck. The cap and the collar on the neck are connected by an elastic connecting lid tether, but the connecting wire of the antenna and the RFID chip is led through a different lid tether, wherein this lid tether is broken when the bottle is first opened. The disadvantage of this solution is that the connecting wire of the RFID chip and the antenna is already torn when the container is first opened, thus making it impossible to identify the container and its contents after the moment of opening.

A similar solution is described in the document CN1 01767678B B, which includes a screw container cap with an RFID chip and an antenna. The cap is connected to a collar on the container neck, wherein a portion of the antenna is led through this connecting portion. However, the connecting portion is rigid, remains in its original position and separates from the cap or collar when the cap is rotated. When the cap is unscrewed for the first time, the antenna is damaged and the entire RFID tag is non-functional.

In another known solution described in the document CN101894286 A, the RFID chip is located on the lid of the container and the antenna is located directly on the container, wherein the connecting wire is led through a flexible connection between the RFID chip and the antenna. However, the document addresses a different technical issue and does not describe the condition of the connecting wire after opening and re-closing the container or the function of this flexible connection. In another known solution described in the document EP 1 083 519 A2, a combination of a container and a container cap assembly in accordance with the preamble of independent claim 1 is disclosed.

These solutions aim to break the connecting wire between the antenna and the RFID chip at the moment of opening the container, make it impossible for the RFID tag to be re-identified after opening the container and thus prevent its reuse with non-original contents. Therefore, this is a measure against counterfeiting the cap or tampering with the contents of the container, wherein none of the documents mentioned addresses the issue of identifying the integrity of the container and its original cap, which could be done after the container has been opened or at the end of the container's lifetime when the container and the cap are recycled together.

### Summary of the Invention

The above shortcomings are to some extent eliminated by a combination of a container and a container cap assembly with an RFID tag , wherein the RFID tag comprises an RFID chip, an antenna for transmitting a radio frequency signal, and a connecting wire connecting the RFID chip to the antenna for transmitting a radio frequency signal, wherein the container comprises a container neck, and the container cap assembly comprises a neck cap, a connecting string connecting the neck cap to the container neck, wherein the connecting wire is led through the connecting string and the neck cap has a first position and a second position, wherein in the first position the container neck is opened and in the second position the container neck is closed by the neck cap, wherein the connecting wire is unbroken in both the first and second positions of the neck cap.

The advantage of leading the connecting wire through the connecting string rigidly connecting the neck cap to the container neck is that the connecting wire of the antenna and the RFID chip is not broken during normal opening and closing of the container, wherein only tearing the connecting wire, i.e. tearing the connecting string and permanently separating the cap from the container neck, makes it impossible to read the RFID tag. It therefore enables unambiguous automatic electronic identification of the integrity of the container and its original cap and speeds up the process of checking the container-cap connection during bulk processing of containers during sorting and recycling. At the same time, it eliminates the occurrence of errors when simply visually checking the connection of the container and the cap. The solution can be applied to any type of container and cap.

In a preferred embodiment, the connecting string is adapted by its length and flexibility to maintain its integrity during movement of the neck cap between its first and second positions. The sufficient length and flexibility of the connecting string ensures protection of the connecting wire during manipulation with the cap.

In a preferred embodiment, one element from the set of container neck, neck cap, and connecting string includes the RFID chip and one element from the set of container neck, neck cap, and connecting string includes the antenna for transmitting a radio frequency signal. This embodiment is preferred because of the variability of the placement of the RFID chip and the antenna for the particular shape of the containers and caps or the materials from which they are made.

Preferably, the container neck comprises a neck collar, wherein the neck collar is loosely disposed around the container neck and the container neck is adapted to prevent the neck collar from being pulled out, wherein the neck collar is connected to the connecting string. The neck collar is freely rotatable around the container neck, which is particularly advantageous for screw caps which would otherwise have to be connected to the neck by a longer connecting string

The container neck cap preferably includes the RFID chip and the neck collar includes the antenna for transmitting a radio frequency signal. This solution is suitable, e.g., for containers with a hinged cap. The embodiment of the RFID chip in the container cap is easier as the cap offers a larger space for its placement compared to the neck collar. Furthermore, the RFID chip is less likely to be damaged in this embodiment, as the likelihood of damaging the cap is lower than the likelihood of damaging the neck (or the bottle neck collar), particularly for plastic bottles. The antenna is relatively bendable and flexible and can therefore be located in the container neck.

In another preferred embodiment, the neck closure includes a screw-on lid and a screw-on lid collar, wherein the screw-on lid collar is loosely disposed around the screw-on lid and the screw-on lid is adapted to prevent the screw-on lid collar from being pulled out, wherein the screw-on lid collar is connected to the connecting string and includes the RFID chip. This embodiment is also advantageous for screw-on caps, as it allows shortening of the length of the connecting string even for containers where the neck of the container does not include a loosely disposed neck collar.

### Description of the Drawings

The summary of the invention is further explained by examples of its embodiments, which are described using the accompanying drawings, in which:
fig. 1 shows a screw cap assembly with a container neck collar and an RFID chip in the neck cap,
fig. 2 shows a screw cap assembly with a container neck collar and an RFID chip in a connecting string closer to the neck cap,
fig. 3 shows a screw cap assembly with a screw-on lid collar and an RFID chip in the screw-on lid collar.

### Exemplary Embodiments of the Invention

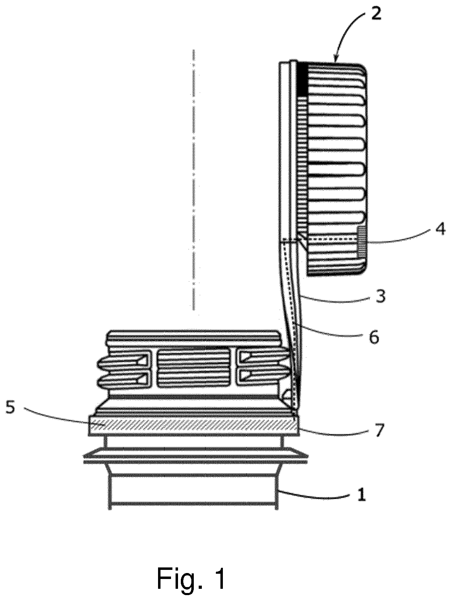

The invention will be further explained by examples of its implementations with reference to the corresponding drawings. One example implementation is an embodiment of a neck screw cap 2 assembly of a plastic bottle with an RFID chip 4 located in the neck cap 2, which is shown in Fig. 1.

A first exemplary embodiment includes an RFID tag on the screw cap 2 of a plastic bottle. On the bottle neck 1 is located a neck collar 7 in the shape of a plastic ring which is rigidly connected to the cap 2 by a connecting string 3. This neck collar Z is loosely disposed and rotatable around the bottle neck 1, wherein the bottle neck 1 cannot be pulled out of the neck collar 7. The RFID tag comprises an RFID chip 4, an antenna 5 for transmitting a radio frequency signal and a connecting wire 6 connecting the RFID chip 4 to the antenna 5, wherein the RFID chip 4 is understood in this case to be a set of all electronic components belonging to the RFID tag except the antenna 5 for transmitting a radio frequency signal, which facilitates the communication of the RFID chip with a reading device. In the first exemplary embodiment, the RFID chip 4 is located on the cap 2 closer to the upper surface of the cap 2 and the RFID tag antenna 5 is located in the bottle neck collar 7. The antenna 5 is small, flexible and more resistant to bending and can therefore be located on the neck collar 7.

The connecting wire 6 of the RFID chip 4 and the antenna 5 is led through the connecting string 3, which is rigidly connected to the cap 2 at one of its ends and rigidly connected to the bottle neck collar 7 at its other end, wherein the portion of the connecting string 3 in contact with the cap 2 has a slightly increased thickness, which can be seen in Fig. 1. The connecting string 3 is flexible for manipulation with the bottle cap 2, wherein such flexibility is understood to mean, e.g., the bendability or elasticity of the entire connecting string 3 or its portions. However, the flexibility and sufficient length of the connecting string 3 when changing the position of the cap 2 allows maintaining the integrity of the connecting string 3 as well as of the connecting wire 6, which is led through the connecting string 3.

The solution of the container cap assembly with an RFID tag includes a number of alternative embodiments in terms of the solution of the connection of the container neck 1 with the cap 2, as well as in terms of the placement of the RFID chip 4 and the antenna 5 for transmitting a radio frequency signal.

A first alternative embodiment of the connection of the container neck 1 to the screw cap 2 comprises a neck collar 7 which is rigidly disposed on the bottle neck 1. Thus, in this embodiment, the collar 7 is not rotatable around the container neck 1 and is directly connected to the screw cap 2 by the connecting string 3. The container neck 1 may also be completely free of the neck collar 7, wherein the antenna 5 of the RFID tag is disposed in the container neck 1 and the container neck 1 is rigidly connected to the neck cap 2 by the connecting string 3. In both of these embodiments, the length of the connecting string 3 is increased so that the connecting string 3 is not damaged even if the cap 2 is rotated several times.

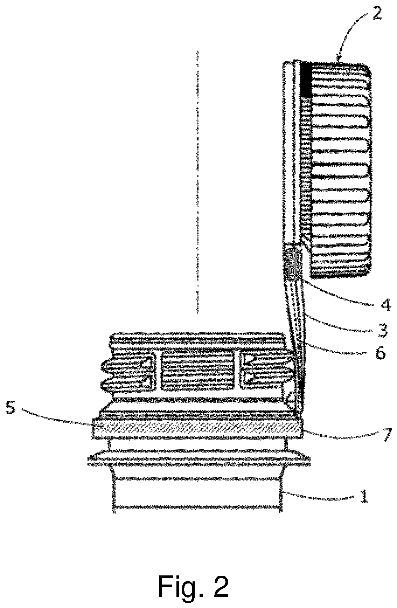

Another alternative embodiment of the cap assembly with a slight modification of the first exemplary embodiment comprises locating both the RFID chip 4 and the connecting wire 6 in the connecting string 3, wherein the RFID chip 4 is located sufficiently close to the cap 2 so that the connecting wire 6 is always broken when the connecting string 3 is torn. An embodiment of the RFID chip 4 in the connecting string 3 closer to the cap 2 is shown in Fig. 2.

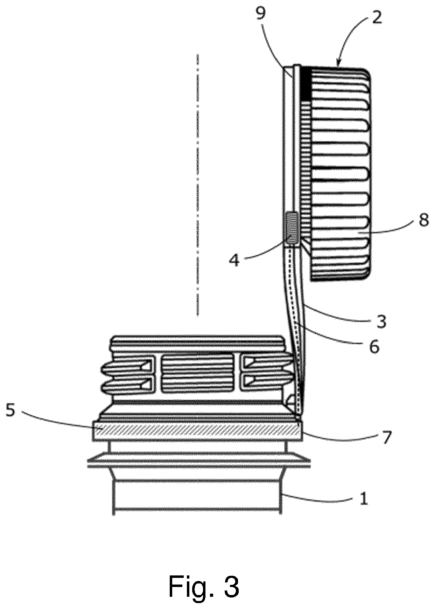

Another alternative embodiment of the cap assembly includes a container neck 1 (or a rigid neck collar 7) that is connected to the neck cap 2 by the connecting string 3, wherein the neck cap 2 includes a screw-on lid 8 and a screw-on lid collar 9. The screw-on lid collar 9 is rotatable around the screw-on lid 8, which cannot be pulled out of the lid collar 9. In this embodiment, the connecting string 3 is connected to the screw-on lid collar 9. In this alternative embodiment, the connecting string 3 may be shorter, as maintaining of the integrity of the connecting string 3 is ensured by the rotation of the screw-on lid collar 9 around the screw cap 8. The RFID chip 4 may be located in the screw-on lid collar 9 or at the place of connection of the screw-on lid collar 9 and the connecting string 3. The solution of the RFID tag in the screw-on cap 2, where the RFID chip 4 is located in the screw-on lid collar 9, is shown in Fig. 3. In this embodiment, the antenna 5 is located in the rigid bottle neck collar 7.

In the following, other possibilities of placing the RFID chip 4 and the antenna 5 in the cap assembly with an RFID tag according to this invention will be described.

In an alternative embodiment, the placement of the RFID chip 4 and the antenna 5 may be reversed, that is, the RFID chip 4 is located in the container neck 1 and the antenna 5 is located on the neck cap 2.

In another embodiment, both elements of the RFID chip 4 and antenna 5 pair are located on only one element, that is, on the container neck 1 or on the neck cap 2 (or on the neck collar 7 or on the screw-on lid collar 9), wherein the connecting wire 6 leads through a substantial portion of the connecting string 3 so that the connecting wire 6 is always broken when the connecting string 3 is torn. For example, the placement of both the RFID chip 4 and the antenna 5 in the bottle neck collar 7 may be advantageous for screw-on caps 2 where the connection of the screw-on cap 2 to the bottle neck 1 is made in two steps, that is, by subsequent insertion of the screw-on lid 8 into the screw-on lid collar 9. The screw-on lid 8 is thus rigidly connected to the connecting string 3 and the neck collar 7, but at the same time the RFID chip 4 is not inserted therein.

The arrangement of the RFID chip 4, the antenna 5 and the connecting wire 6 according to the invention can be implemented in a screw type, but also any other type of cap 2, e.g., for a non-screw hinged container cap 2 with a wide neck 1. In this embodiment, the connecting string 3 may be shorter or only take the form of a kind of lid tether. In this variant, all of the alternatives of the individual elements discussed above are also possible.

The principle of the solution according to the invention involves the RFID tag (the connection of the RFID chip 4 and the antenna 5 by means of a connecting wire 6) being functional in a completely new bottle and likewise in a bottle whose cap 2 has already been manipulated. When the bottle is opened and closed by screwing the cap 2, the connecting wire 6 is protected by the flexible and bendable connecting string 3 and remains undamaged. The RFID tag is therefore readable at any time during the use of the bottle, provided that the connecting string 3, and therefore the connecting wire 6 connecting the RFID chip 4 to the antenna 5, are not completely torn. However, in addition to the connecting wire 6, the antenna 5 must also not be damaged.

The aim of the solution according to the invention is to identify the integrity of the container and its original cap 2, in particular at the end of the lifetime of the bottle. Collection of plastic bottles with the original cap 2 is important both for collection prior to recycling and for recollection of reusable returnable bottles for which a deposit is paid out. In both cases, the solution ensures that the bottle also includes the original cap 2, meaning that the bottle and the cap 2 are returned together and the original cap 2 has not been replaced by a cap 2 from another bottle. Electronic identification of the connection of the bottle to the original cap 2 by means of an RFID tag is faster than visual or manual inspection and eliminates errors that occur during this individual inspection. It can also be carried out on a significantly larger scale (in bulk) and remotely.

The RFID chip 4 is implemented into the neck cap 2 (or another element of the cap assembly) by sealing directly during the production of the given element, in the case of a plastic bottle thus already during the production of the preform of the bottle, alternatively during the forming of the bottle from the preform. For this purpose, it is therefore only necessary to modify the moulding dies.

### Industrial Applicability

The above-described arrangement of the RFID chip and the antenna, whose connecting wire leads through a connecting string, can be used to connect any two elements whose integrity is electronically checked.

### List of Reference Numerals

- 1 -: container neck
- 2 -: neck cap
- 3 -: connecting string
- 4 -: RFID chip
- 5 -: antenna
- 6 -: connecting wire
- 7 -: neck collar
- 8 -: screw-on lid
- 9 -: screw-on lid collar

## Claims

1. A combination of a container and a container cap assembly, said combination including an RFID tag, wherein the RFID tag comprises an RFID chip (4), an antenna (5) for transmitting a radio frequency signal, and a connecting wire (6) connecting the RFID chip (4) to the antenna (5) for transmitting a radio frequency signal, wherein the container comprises a container neck (1), and the container cap assembly comprises a neck cap (2), a connecting string (3) connecting the neck cap (2) to the container neck (1), wherein the neck cap (2) has a first position and a second position, wherein in the first position the container neck (1) is opened and in the second position the container neck (1) is closed by the neck cap (2), wherein the connecting wire (6) is unbroken in both the first and second positions of the neck cap, **characterized in that** the connecting wire (6) is led through the connecting string (3).

2. The combination of the container and the container cap assembly according to claim 1, **characterized in that** the connecting string (3) is adapted by its length and flexibility to maintain its integrity during movement of the neck cap (2) between its first and second positions.

3. The combination of the container and the container cap assembly according to claims 1 to 2, **characterized in that** one element from the set of container neck (1), neck cap (2) and connecting string (3) comprises the RFID chip (4) and one element from the set of container neck (1), neck cap (2) and connecting string (3) comprises the antenna (5) for transmitting a radio frequency signal.

4. The combination of the container and the container cap assembly according to claims 1 to 3, **characterized in that** the container neck (1) comprises a neck collar (7), wherein the neck collar (7) is loosely disposed around the container neck (1) and the container neck (1) is adapted to prevent the neck collar (7) from being pulled out, wherein the neck collar (7) is connected to the connecting string (3).

5. The combination of the container and the container cap assembly according to claim 4, **characterized in that** the neck cap (2) comprises the RFID chip (4) and the neck collar (7) comprises the antenna (5) for transmitting a radio frequency signal.

6. The combination of the container and the container cap assembly according to claims 1 to 5, **characterized in that** the neck cap (2) comprises a screw-on lid (8) and a screw-on lid collar (9), wherein the screw-on lid collar (9) is loosely disposed around the screw-on lid (8) and the screw-on lid (8) is adapted to prevent the screw-on lid collar (9) from being pulled out, wherein the screw-on lid collar (9) is connected to the connecting string (3) and comprises the RFID chip (4).

## Patentansprüche

1. Eine Kombination aus einem Behälter und einer Behälterverschlussbaugruppe, wobei die Kombination ein RFID-Tag umfasst, wobei das RFID-Tag einen RFID-Chip (4), eine Antenne (5) zur Übertragung eines Hochfrequenzsignals und einen den RFID-Chip (4) mit der Antenne (5) verbindenden Verbindungsdraht (6) zur Übertragung eines Hochfrequenzsignals umfasst, wobei der Behälter einen Behälterhals (1) umfasst und die Behälterverschlussbaugruppe eine Halskappe (2) und einen die Halskappe (2) mit dem Behälterhals (1) verbindenden Verbindungsstrang (3) umfasst, wobei die Halskappe (2) eine erste Position und eine zweite Position aufweist, wobei in der ersten Position der Behälterhals (1) geöffnet ist und in der zweiten Position der Behälterhals (1) durch die Halskappe (2) verschlossen ist, wobei der Verbindungsdraht (6) sowohl in der ersten als auch in der zweiten Position der Halskappe (2) ununterbrochen ist, **dadurch gekennzeichnet, dass** der Verbindungsdraht (6) durch den Verbindungsstrang (3) geführt ist.

2. Die Kombination aus dem Behälter und der Behälterverschlussbaugruppe nach Anspruch 1, **dadurch gekennzeichnet, dass** der Verbindungsstrang (3) durch seine Länge und Flexibilität angepasst ist, um seine Integrität während der Bewegung der Halskappe (2) zwischen ihrer ersten und zweiten Position aufrechtzuerhalten.

3. Die Kombination aus dem Behälter und der Behälterverschlussbaugruppe nach den Ansprüchen 1 bis 2, **dadurch gekennzeichnet, dass** ein Element aus dem Satz von Behälterhals (1), Halskappe (2) und Verbindungsstrang (3) den RFID-Chip (4) und ein Element aus dem Satz von Behälterhals (1), Halskappe (2) und Verbindungsstrang (3) die Antenne (5) zur Übertragung eines Hochfrequenzsignals umfasst.

4. Die Kombination aus dem Behälter und der Behälterverschlussbaugruppe nach den Ansprüchen 1 bis 3, **dadurch gekennzeichnet, dass** der Behälterhals (1) einen Halskragen (7) umfasst, wobei der Halskragen (7) lose um den Behälterhals (1) angeordnet ist und der Behälterhals (1) dazu eingerichtet ist, zu verhindern, dass der Halskragen (7) herausgezogen wird, wobei der Halskragen (7) mit dem Verbindungsstrang (3) verbunden ist.

5. Die Kombination aus dem Behälter und der Behälterverschlussbaugruppe nach Anspruch 4, **dadurch gekennzeichnet, dass** die Halskappe (2) den RFID-Chip (4) umfasst und der Halskragen (7) die Antenne (5) zur Übertragung eines Hochfrequenzsignals umfasst.

6. Die Kombination aus dem Behälter und der Behälterverschlussbaugruppe nach den Ansprüchen 1 bis 5, **dadurch gekennzeichnet, dass** die Halskappe (2) einen Schraubdeckel (8) und einen Schraubdeckelkragen (9) umfasst, wobei der Schraubdeckelkragen (9) lose um den Schraubdeckel (8) angeordnet ist und der Schraubdeckel (8) dazu eingerichtet ist, zu verhindern, dass der Schraubdeckelkragen (9) herausgezogen wird, wobei der Schraubdeckelkragen (9) mit dem Verbindungsstrang (3) verbunden ist und den RFID-Chip (4) umfasst.

## Revendications

1. Une combinaison d'un récipient et d'un ensemble de capuchon de récipient, ladite combinaison comprenant une étiquette RFID, où l'étiquette RFID comprend une puce RFID (4), une antenne (5) pour transmettre un signal radiofréquence, et un fil de connexion (6) connectant la puce RFID (4) à l'antenne (5) pour transmettre un signal radiofréquence, où le récipient comprend un col de récipient (1), et l'ensemble de capuchon de récipient comprend un capuchon de col (2) et une chaîne de connexion (3) connectant le capuchon de col (2) au col de récipient (1), où le capuchon de col (2) a une première position et une seconde position, où dans la première position le col de récipient (1) est ouvert et dans la seconde position le col de récipient (1) est fermé par le capuchon de col (2), où le fil de connexion (6) est ininterrompu à la fois dans les première et seconde positions du capuchon de col (2), **caractérisée en ce que** le fil de connexion (6) est conduit à travers la chaîne de connexion (3).

2. La combinaison du récipient et de l'ensemble de capuchon de récipient selon la revendication 1, **caractérisée en ce que** la chaîne de connexion (3) est adaptée par sa longueur et sa flexibilité pour maintenir son intégrité pendant le mouvement du capuchon de col (2) entre sa première et seconde position.

3. La combinaison du récipient et de l'ensemble de capuchon de récipient selon les revendications 1 à 2, **caractérisée en ce qu'**un élément de l'ensemble du col de récipient (1), du capuchon de col (2) et de la chaîne de connexion (3) comprend la puce RFID (4) et un élément de l'ensemble du col de récipient (1), du capuchon de col (2) et de la chaîne de connexion (3) comprend l'antenne (5) pour transmettre un signal radiofréquence.

4. La combinaison du récipient et de l'ensemble de capuchon de récipient selon les revendications 1 à 3, **caractérisée en ce que** le col de récipient (1) comprend un collier de col (7), où le collier de col (7) est disposé de manière lâche autour du col de récipient (1) et le col de récipient (1) est adapté pour empêcher le collier de col (7) d'être retiré, où le collier de col (7) est connecté à la chaîne de connexion (3).

5. La combinaison du récipient et de l'ensemble de capuchon de récipient selon la revendication 4, **caractérisée en ce que** le capuchon de col (2) comprend la puce RFID (4) et le collier de col (7) comprend l'antenne (5) pour transmettre un signal radiofréquence.

6. La combinaison du récipient et de l'ensemble de capuchon de récipient, selon les revendications 1 à 5, **caractérisée en ce que** le capuchon de col (2) comprend un couvercle à vis (8) et un collier de couvercle à vis (9), où le collier de couvercle à vis (9) est disposé de manière lâche autour du couvercle à vis (8) et le couvercle à vis (8) est adapté pour empêcher le collier de couvercle à vis (9) d'être retiré, où le collier de couvercle à vis (9) est connecté à la chaîne de connexion (3) et comprend la puce RFID (4).
